(19)

**Europäisches Patentamt**
**European Patent Office**
**Office européen des brevets**

(11) **EP 2 278 584 A1**

(12) **EUROPEAN PATENT APPLICATION**

(43) Date of publication:
**26.01.2011 Bulletin 2011/04**

(51) Int Cl.:
***G11B 7/09*** *(2006.01)*

(21) Application number: **09305694.3**

(22) Date of filing: **22.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Thomson Licensing**
**92130 Issy-les-Moulineaux (FR)**

(72) Inventors:
• **Knittel, Joachim**
**78532, Tuttlingen (DE)**

• **Ballweg, Christof**
**97900, Kuelsheim (DE)**

(74) Representative: **Arnold, Klaus-Peter**
**Deutsche Thomson OHG**
**European Patent Operations**
**Karl-Wiechert-Allee 74**
**30625 Hannover (DE)**

(54) **Method and apparatus for providing low noise push-pull tracking for an optical disc**

(57) The method for reading data on an optical disc (1) comprising marks and spaces being arranged in tracks (T1-T3), comprises the following steps: generating a laser beam (L) with a pickup for reading data arranged on a track of the optical disc, detecting a reflected signal of the laser beam with the pickup and providing a HF data signal and a push-pull tracking error signal, providing a slice level (44) for the tracking error signal, and selecting the slice level such, that tracking error signals originating from the smallest marks are discarded. The slice level is selected particularly such, that tracking error signals are discarded when the laser beam is on a mark having a size below a resolution limit of the pickup and the optical disc comprises a nonlinear layer for providing a super-resolution effect.

Fig. 4

**Description**

**TECHNICAL FIELD OF THE INVENTION**

The present invention relates to a method and an apparatus for reading data on an optical disc comprising marks and spaces being arranged in tracks, which use a tracking regulation utilizing a push-pull tracking error signal.

**BACKGROUND OF THE INVENTION**

Optical storage media are media in which data are stored in an optically readable manner, for example by means of a laser and an optical detector, for example a photodetector, being integrated within a pickup. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB).

The storage medium with the highest data capacity is at present the Blu-Ray disc (BD), which allows to store up to about 50 GB on a dual layer disc. For reading and writing of a Blu-Ray disc an pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138 - 160 nm.

The diffraction limit of optical instruments as described by the Abbe theory is about lambda/2NA, which is 238nm for a Blu-Ray type pickup having a laser wavelength lambda=405nm and a numerical aperture NA=0,85. For the resolution limit of a pickup for the read out of the high frequency (HF) data signal of a Blu-Ray disc, a higher resolution can be obtained because of a differential signal detection, when the laser beam moves over the marks and spaces of a track on the Blu-Ray disc. By providing a reference level for the HF read out signal, very small amplitude changes can be detected, in accordance with the different reflectivity of the marks and spaces, which allows to detect marks with a Blu-Ray type pickup having a size of about lambda/4NA=120nm.

New optical storage media with a super-resolution structure offer the possibility to increase the data density of the optical storage medium by a factor of two to four in one dimension as compared with the Blu-Ray disc. This is possible by including a nonlinear layer, which is placed above a data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Therefore, the super-resolution effect allows to record and read data stored in marks of an optical disc, which have a size below the resolution limit of lambda/4NA of a corresponding pickup.

The nonlinear layer is often called a super-resolution near-field structure (Super-RENS) layer because it is assumed that for some specific materials, the optical effect of reducing the effective spot size of the laser beam is based on a near-field interaction between the marks and spaces of the data layer and the nonlinear layer.

US-A-2005/0157617 discloses a pre-pit signal detecting apparatus, in which an amplifying level for a push-pull signal is adjusted according to an RF sum signal, to reduce a level difference between a signal detected from a pre-pit adjacent to a mark area and a signal detected from a pre-pit adjacent to a space area.

**BRIEF SUMMARY OF THE INVENTION**

The method for reading data on an optical disc, which comprises marks and spaces arranged in tracks, generates a laser beam with a pickup for reading data on a track of the optical disc, detects a reflected signal with the pickup for providing a HF data signal and a push-pull tracking error signal, provides a slice level for the tracking error signal and selects the slice level such, that tracking error signals originating from spaces between two marks are discarded.

In a preferred embodiment, the slice level is selected such, that in addition tracking error signals originating from the smallest marks are discarded. The smallest marks are for example 2T and/or 3T marks, when a modulation code is used utilizing a size of 2T to 8T or 9T for the marks and spaces, wherein T is the channel bit length. The modulation code is in particular a channel modulation code by means of which digital data are coded into marks and spaces. To determine whether the laser beam is currently on a small or a larger mark or on a space between two marks, the HF data signal is advantageously used, and the slice level is calculated as a function of the HF data signal.

The apparatus comprises a tracking regulation and a pickup comprising a laser and an optical detector for reading data on an optical disc, wherein the tracking regulation comprises a slice level calculator providing a threshold level for performing the method. The tracking regulation comprises in particular a subtraction means coupled with its inputs to detector segments of the optical detector for providing a push-pull tracking error signal, and wherein the subtraction means is coupled with an output to a discriminator for discarding tracking error signals originating from the smallest marks.

In an aspect of the invention, the method and apparatus are provided for reading data on an optical disc comprising a nonlinear layer for providing a super-resolution effect. The nonlinear layer comprises for example a super-resolution structure representing a mask layer of a Super-RENS optical read-only disc. The slice level is then selected advantageously such that all pits being below the resolution limit of lambda/4NA of the pickup, e.g. the 2T and 3T pits, and all lands between pits are discarded, for providing an improved tracking error signal. Because the slice level removes an essential part of the noise contribution, the track pitch of the optical disc can be reduced in addition for increasing the data capacity of the optical disc. The invention has the in particular the advantage that neither the optical disc nor the optics of the pickup have to be modified.

In a further aspect of the invention, in addition the amplitude of the push-pull tracking error signal of the smallest mark included in the tracks of the optical disc, e.g. of the 2T mark, is determined by sampling the data signals of the detector segments of the optical detector in defined time intervals, summing up separately the samples of the data signals of the detector segments for each time interval, and calculating a summed-up push-pull signal from the sums of the samples of the data signals of the detector segments. The sums of the samples of the data signals may be summed up over a number of $10^3$ to $10^7$, and each new sample is added to the sums of the samples of the data signals and at the same time the oldest sample of the sums of the samples of the data signals signal is discarded. The summed-up push-pull signal may be normalized by the total number of samples taken or by the sum of the sums of the samples of the data signals of the detector segments.

**BRIEF DESCRIPTION OF THE DRAWINGS**

Preferred embodiments of the invention are explained now in more detail below by way of example with reference to schematic drawings, which show:

Fig. 1            a part of an optical storage medium comprising a layer stack with a super resolution layer in a cross-section,

Figs. 2a, 2b, 2c   a laser beam located on a track of the storage medium for reading data, and a respective optical detector,

Fig. 3            results of a simulation for determining the amplitude of a tracking error signal as a function of the mark size and the radial displacement of the laser beam, and

Fig. 4            a circuit for calculation of a tracking error signal.

**DETAILED DESCRIPTION OF PREFERRED EMBODIMENTS**

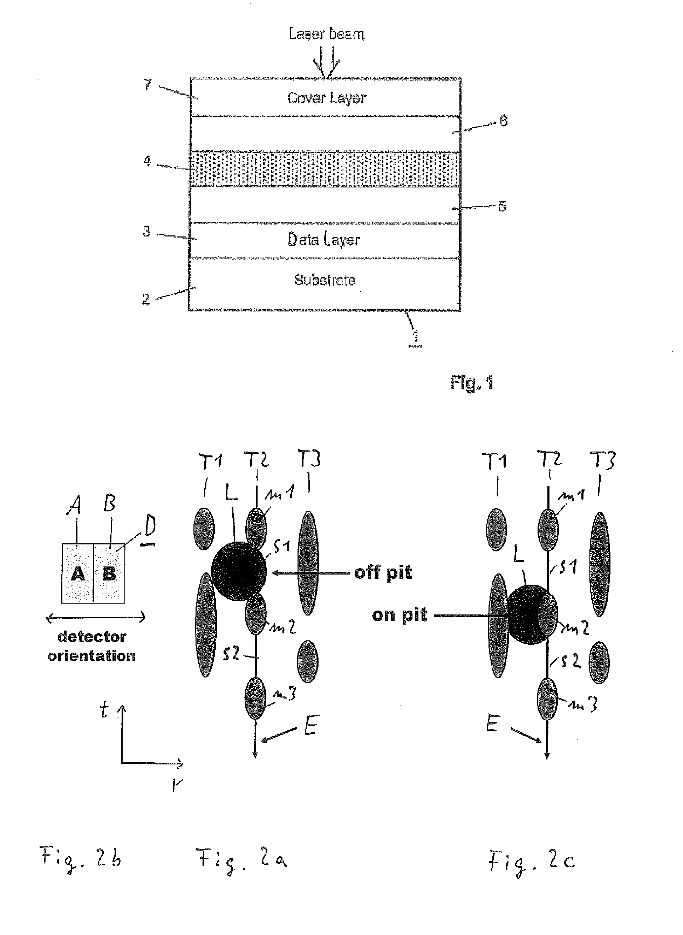

In Fig. 1 a preferred embodiment an optical storage medium 1 is shown in a cross-section in a simplified manner. The optical storage medium 1 is for example a read-only (ROM) optical disc. A data layer 3 is arranged on a substrate 2 of the optical storage medium 1, which may comprise a reflective metallic layer, for example an aluminum layer. The data layer 3 has a data structure consisting of marks and spaces arranged on essentially parallel tracks. In the case of a ROM disc, the marks and spaces consist of pits and lands, the pits being molded or embossed on the surface of substrate 2 representing the data layer 3, and the reflective metallic layer covers the data layer 3.

On the data layer 3 a first dielectric layer 5 is arranged, on which a nonlinear layer 4 is disposed for providing the function of a mask layer for utilizing a super-resolution effect. The nonlinear layer 4 comprises in particular a super-resolution structure, e.g. a super-resolution near-field structure (Super-RENS). The optical storage medium 1 is for example an optical disc having a size similar to a DVD or a Blu-ray disc. Above the nonlinear layer 4 a second dielectric layer 6 is disposed. As a further layer, a cover layer 7 is disposed as a protective layer on the second dielectric layer 5.

For reading the data of the data layer 3, a laser beam is applied in this embodiment from the top to the storage medium 1, penetrating first the cover layer 7. The first and second dielectric layers 5, 6 comprise for example the material $ZnS-SiO_2$. The substrate 2 and the cover layer 7 may consist of a plastic material, as known from DVDs and CDs. In other embodiments, the reflective metallic layer may be omitted, when a super-resolution near field structure is used, which does not provide an increase in transmittance due to a heating effect, but works with another nonlinear effect, for example utilizes an effect providing an increased reflectivity of the nonlinear layer 4 when irradiated with a laser beam. The layers of the storage medium 1 are arranged in particular as a layer stack.

In figure 2a three tracks T1, T2 and T3 of the optical disc 1 of figure 1 are shown and a light spot L of a laser beam provided by a pickup for reading the data of the track T2. The movement of the light spot L in track direction t is indicated on the rotating disc by arrow E. The track T2 comprises e.g. marks m1, m2 and m3 and spaces s1 and s2. The light spot L reads therefore consecutively marks m1, m2, m3 etc. of track T2. The light spot L is located in this embodiment between marks m1 and m2, but shifted radially a little to the left, into the direction of track T1.

For keeping the light spot L on the track T2, a tracking regulation is provided for the pickup, which shifts the pickup with the light spot L to the left or to the right, in radial direction r of the optical disc, according to a tracking error signal. The tracking error signal is provided for example as a push/pull tracking error signal generated by means of an optical detector D, shown in figure 2b. The detector D is split in this embodiment into two segments A, B which allow to detect movements of the pickup in radial direction r, with regard to the selected track T2. The segments A, B are photosensitive elements as known from prior art. They provide corresponding electrical signals a, b from which a push/ pull tracking error signal TE can be calculated with the equation:

$$TE = (a-b)/(a+b) \qquad\qquad (1)$$

When the light spot L is between two marks as shown in figure 2a, the tracking error signal TE is small or even zero. When the light spot L is in the vicinity of a mark, for example in the vicinity of mark m2 as shown in figure 2c, a high positive or negative tracking error signal TE is obtained, depending on the radial displacement of the light spot L with regard to the track T2. When the light spot L is exactly centered on the mark m2, the tracking error signal TE is zero, because both segments A, B provide signals of same amplitude.

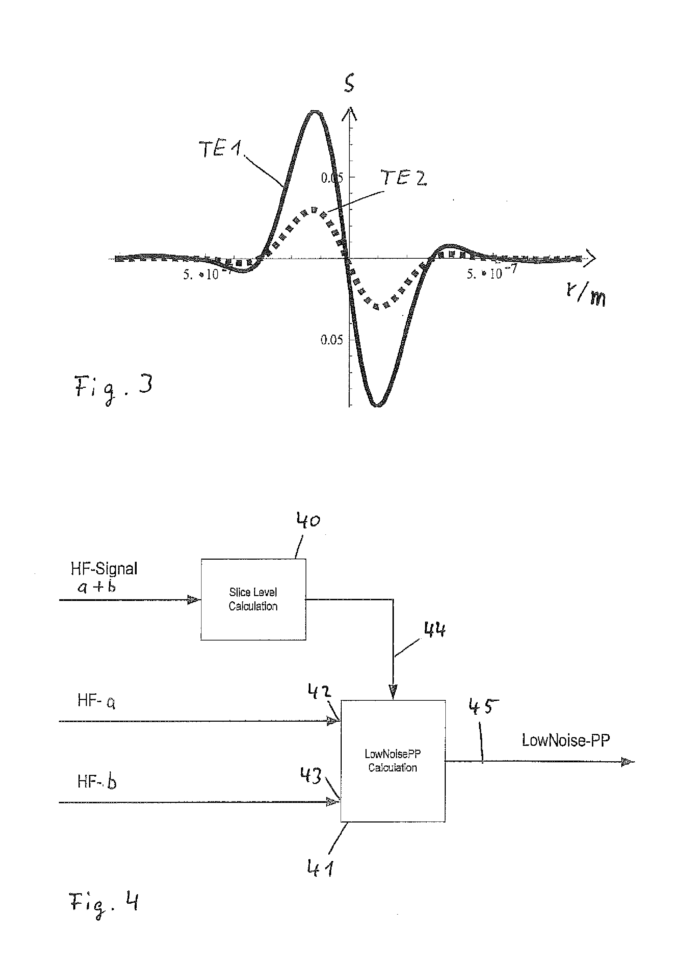

It can be shown with a simulation, that the tracking error signal TE depends on the size of the marks. Results of the simulation are shown in figure 3. The tracking error signal TE1 has an amplitude S as a function of the radial position r with regard to a selected track, which is generated by a single pit having a length of 150 nm. The tracking error signal TE2 is generated by a single pit having 50 nm length.

The simulation takes into account the parameters of a pickup having a numerical aperture NA=0,85 and a laser providing a laser beam with a wavelength $\lambda$=405 nm, as used for Blu ray discs. For the pits, a disc was taken into account comprising a mask layer for providing a super-resolution effect and comprising a data layer with pits having a phase depth of 0,2 $\lambda$. As can be seen, for both cases the tracking error signal is zero, when the light spot is exactly centered on a track, for r=0, but the tracking error signal TE1 is more than twice the tracking error signal TE2, when the light spot is off track.

An apparatus for reading data on an optical disc according to the invention comprises a pickup with a laser, an optical detector and a tracking regulation for reading data on an optical disc, the tracking regulation including a slice level calculator for providing a slice level for a calculation of the tracking error signal. The slice level is selected such, that signals originating from the small marks or the spaces, e.g. s1, s2, of the optical disc are discarded.

A circuit showing schematically the calculation of a tracking error signal by taking into account the slice level is shown in figure 4. A bloc 40 representing the slice level calculator indicates that a slice level is calculated from the sum of the detector signals of detector D, in this embodiment the sum of signals a, b, which corresponds with the HF data signal. The sum signal a+b depends on the size of the marks and is smaller for large marks and larger for small marks and spaces, depending on the physical structure of the optical disc. When using other materials for the layers, the signals may be inverted so that the sum signal a+b is larger for large marks and smaller for small marks and spaces. The slice level is then calculated accordingly. In block 40, a decision is made whether the sum signal a+b is from a space or a small mark, or is from a larger mark, which decision provides the slice level for the tracking error signal. The sum signal may be calculated digitally by using an analog/digital converter included in bloc 40 for sampling of the sum signal a+b.

The invention can be used particularly for an apparatus for reading data of a super resolution disc comprising marks being below the diffraction limit of a corresponding pickup of the apparatus, because the small super resolution marks provide only small tracking error signals due to the nature of its size. By discarding the tracking error signal when the laser beam is on a space between two marks and discarding tracking error signals originating from the super-resolution marks being smaller than the diffraction limit of the pickup, a low noise tracking error signal can be obtained. In particular the tracking error signals originating from the 2T and/or 3T marks can be discarded by selecting an appropriate slice level, to improve the tracking error signal.

In a further aspect of the invention, a tracking error signal 45 is calculated in a block 41 which receives the slice level signal 44 of bloc 40 and at separate inputs the single signals from the detector segments of detector D. In this embodiment, the bloc 41 comprises a first input 42 for receiving the high frequency signal a of detector element A and a second input 43 for receiving the high frequency signal b of detector element B. Both input signals a, b are sampled within bloc 41 during defined, in particular during constant time intervals by using analog/digital converters having the same sampling frequency. Then a push/pull signal is generated for each sample period according to equation 1.

By using the slice level signal 44 of the slice level calculation bloc 40, tracking error signals $PP_{on}(i)$ are summed up in a first sum and tracking error signals $PP_{off}(i)$ are summed up in a second sum, the index i indicating the respective sample. The $PP_{on}(i)$ sum is the sum of the push-pull signals, when the slice level signal 44 indicates a larger mark, and the $PP_{off}(i)$ sum is the sum of the push-pull signals, when the slice level signal 44 indicates a smaller mark or a space.

A PP$_{single}$ signal corresponding to the signal of the smallest mark is calculated in accordance with equation 2, in which both sums are subtracted and the result is divided by the sum of both sums:

$$PP_{single} = \frac{\sum_i PP_{on}(i) - \sum_i PP_{off}(i)}{\sum_i PP_{on}(i) + \sum_i PP_{off}(i)} \qquad (2)$$

The PP$_{single}$ signal is calculated continuously with each new sample i in accordance with the data being read by the detector D. With equation 2, the PP$_{single}$ signal is calculated by using typically a number of l = $10^3$ to $10^7$ samples for the sums PP$_{off}$(i), PP$_{on}$(i) for averaging out noise of the detector. The oldest sample is always discarded when a new sample i is received, therefore keeping the number of samples in equation 2 constant. With the determination of the PP$_{single}$ signal corresponding with the push/pull signal of the smallest mark, the PP$_{single}$ signal is filtered out in the final tracking error signal. Also small tracking error signals received when the laser beam is on a space between two marks are averaged out in bloc 41, so that a low noise push/pull tracking error signal 45 is provided.

At the beginning of the tracking process, after starting to read data on the optical disc, it is advantageous to use a smaller number l of samples for calculating the PP$_{single}$ signal, for example to use a number of $10^2$ to $10^4$ samples. This accelerates the recognition of a track for the pickup, because the push/pull tracking error signal 45 is calculated faster. As soon as a stable tracking is achieved for the pickup, the sample number is increased to l = $10^3$ to $10^7$ to improve the stability and accuracy of the tracking.

The calculations as described with regard to figure 4 are performed advantageously digitally and the respective circuit can be integrated for example within a servo controller of the apparatus. The invention is particularly applicable for super-resolution discs comprising a nonlinear layer, but may be used also for other optical discs like DVDs or Blu-ray discs for improving the tracking regulation. The invention recites therefore in the claims herein after appended.

**Claims**

1. Method for reading data on an optical disc (1) comprising marks and spaces being arranged in tracks (T1-T3), comprising the following steps:

   generating a laser beam (L) with a pickup for reading data arranged on a track of the optical disc,
   detecting a reflected signal of the laser beam with an optical detector (D) of the pickup and providing a HF data signal and a push-pull tracking error signal,
   providing a slice level (44) for the tracking error signal, and
   selecting the slice level such, that tracking error signals originating from a space between two marks are discarded.

2. The method of claim 1, comprising the step of selecting the slice level such, that tracking error signals originating from the smallest marks are discarded.

3. The method of claim 1 or 2, comprising the step of selecting the slice level such, that tracking error signals originating from 2T and/or 3T marks are discarded.

4. The method of claim 1, 2 or 3, comprising the step of using the HF data signal (a+b) to determine whether the laser beam (L) is currently on a mark or between two marks.

5. The method of one of the preceding claims, wherein the optical disc comprises a nonlinear layer for providing a super-resolution effect, and including the step of selecting the slice level such, that tracking error signals are discarded when the laser beam is on a mark having a size below a resolution limit of lambda/4NA of the pickup.

6. The method of one of the preceding claims, comprising the step of sampling the data signals (a, b) of detector segments (A, B) of the optical detector (D) in defined time intervals, summing up separately the samples of the data signals (a, b) of the detector segments (A, B) for each time interval, and calculate a summed-up push-pull signal from the sums of the samples of the data signals (a, b) of the detector segments (A, B) to determine the amplitude of the push-pull tracking error signal of the smallest mark included on the tracks of the optical disc (1).

7. The method of claim 6, comprising the step of summing up the sums of the samples of the data signals (a, b) of the detector segments (A, B) over a number of $10^3$ to $10^7$, adding each new sample to the sums of the samples of the data signals (a, b) of the detector segments (A, B) and discarding at the same time the oldest sample of the sums of the samples of the data signals (a, b) of the detector segments (A, B).

8. The method of one of the preceding claims, wherein the method is used for an optical disc (1) having a track pitch between adjacent tracks (T1-T3), which is in a range of or below a diffraction limit of lambda/2NA of a pickup for reading of the data.

9. An apparatus with
a tracking regulation (40, 41) and a pickup comprising a laser and an optical detector (D) for reading data on an optical disc (1), wherein
the tracking regulation comprises a slice level calculator (40) providing a threshold level for performing a method in accordance with one of the preceding claims.

10. The apparatus of claim 9, wherein the slice level calculator (40) utilizes the HF data signal provided by the optical detector (D) for determining the threshold level.

11. The apparatus of claim 9 or 10, wherein the tracking regulation (40, 41) comprises a subtraction means coupled with its inputs (42, 43) to detector segments (A, B) of the optical detector (D) for providing a push-pull tracking error signal, and wherein the subtraction means is coupled with an output to a discriminator for discarding tracking error signals originating from the smallest marks.

Fig. 1

Fig. 2b        Fig. 2a        Fig. 2c

Fig. 3

Fig. 4

Europäisches
Patentamt

European
Patent Office

Office européen
des brevets

# EUROPEAN SEARCH REPORT

**Application Number**

EP 09 30 5694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/176334 A1 (YAMANAKA YUTAKA [JP]) 28 November 2002 (2002-11-28) * the whole document * | 1-11 | INV. G11B7/09 |
| A | US 2006/072434 A1 (SHINTANI TOSHIMICHI [JP] ET AL) 6 April 2006 (2006-04-06) * the whole document * | 1-11 | |
| A | US 2008/285431 A1 (MINEMURA HIROYUKI [JP] ET AL) 20 November 2008 (2008-11-20) * the whole document * | 1-11 | |
| A | KURIHARA K ET AL: "Super-RENS ROM Disc with Narrow Track Pitch" OPTICAL DATA STORAGE TOPICAL MEETING, 2006 MONTREAL, QUEBEC, CANADA 23-26 APRIL 2006, PISCATAWAY, NJ, USA,IEEE, 23 April 2006 (2006-04-23), pages 203-205, XP010916965 ISBN: 978-0-7803-9494-0 * the whole document * | 1-11 | |
| A | WO 2008/071653 A (THOMSON LICENSING [FR]; KRAUSE MICHAEL [DE]; PRZYGODDA FRANK [DE]; KNA) 19 June 2008 (2008-06-19) * the whole document * | 1-11 | **TECHNICAL FIELDS SEARCHED (IPC)** G11B |

The present search report has been drawn up for all claims

| Place of search | Date of completion of the search | Examiner |
|---|---|---|
| The Hague | 30 September 2009 | Skaropoulos, N |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 30 5694

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2009

| Patent document cited in search report | | Publication date | Patent family member(s) | | Publication date |
|---|---|---|---|---|---|
| US 2002176334 | A1 | 28-11-2002 | JP | 2002352450 A | 06-12-2002 |
| US 2006072434 | A1 | 06-04-2006 | CN | 1758346 A | 12-04-2006 |
| | | | JP | 2006107588 A | 20-04-2006 |
| US 2008285431 | A1 | 20-11-2008 | CN | 101308679 A | 19-11-2008 |
| | | | JP | 2008287795 A | 27-11-2008 |
| WO 2008071653 | A | 19-06-2008 | AU | 2007331564 A1 | 19-06-2008 |
| | | | EP | 2092522 A1 | 26-08-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050157617 A